# EUROPEAN PATENT APPLICATION

(11) **EP 4 201 512 A1**
(43) Date of publication of application: **28.06.2023**
(21) Application number: 21216854.6
(22) Date of filing: 22.12.2021
(51) Int. Cl.: B01J 20/04, B01J 20/06, B01J 20/28, B01J 20/30, C01F 7/784, C01F 7/785, C02F 1/28

(54) **METHOD FOR PRODUCING IRON-BASED LAYERED DOUBLE HYDROXIDES AND OXIDES**

(71) Applicant: VITO NV, 2400 Mol (BE)
(72) Inventor: Seftel, Elena Mihaela, 2400 Mol (BE); Vangeneugden, Dirk, 2400 Mol (BE)
(74) Representative: Arnold & Siedsma

(57) **Abstract**

The present invention is in the technical filed of layered double hydroxides and relates to methods for producing iron based double hydroxides (Fe-LDHs) and oxides (Fe-LDOs) and Fe-LDHs and Fe-LDOs obtained therefrom. Further, the present invention pertains to the use of said Fe-LDHs and Fe-LDOs.

## Description

### TECHNICAL FIELD

The present invention is in the technical filed of layered double hydroxides and relates to methods for producing iron-based double hydroxides (Fe-LDHs) and oxides (Fe-LDOs). The present invention also relates to Fe-LDHs and Fe-LDOs obtained therewith. Further, the present invention pertains to the use of said Fe-LDHs and Fe-LDOs.

### BACKGROUND ART

Heavy metals such as Cr, Mo, W, Mn, V, Nb, Sb, etc. are found in low-grade industrial side or waste streams such as hydrometallurgical slags. These industrial side or waste streams are often complex mixtures in which the by-product metals are usually present in low to very low amounts compared to the associated major metals. In the art, metal liberation by alkaline leaching is typically performed on side or waste streams, generating complex leachate mixtures with high pH (e.g., pH from 12 to 14) containing the valuable metals. Further treatment of these leachate mixtures is then necessary in order to separate, recover or remove the metals therefrom. However, as the pH of the leachate mixtures is high, any conventional recovery or removal treatment first requires the reduction of the pH of these mixtures to the acidic range (e.g., to a pH below 5, typically around 2 to 3) before actually proceeding with the further separation, recovery or removal of the metals. This pH reduction is often a challenging and costly operation.

The state-of-the-art regarding oxyanion uptake discloses sorbents of different nature or provenience, such as activated carbons, anionic exchange resins, bio-materials, waste products, or minerals, the majority thereof having low stability and/or low performance (i.e., limited sorption capacity) in alkaline environment (i.e., at pH higher than 7). For example, anionic exchange resins (such as Purolite^{®} A830, Lewatit^{®} MP 62, Lewatit^{®} M 610, Lewatit^{®} MP 64), only efficiently work at a pH lower than 7 (typically in a pH range of 1 to 4). Moreover, the sorption equilibrium for such resins is only reached after about 2 hours, the uptake of heavy metal oxyanions hence being very slow. And even in the acidic conditions (pH lower than 7), the maximum sorption capacity of many of the anionic exchange resins known in the art is about 40 mg of heavy metal oxyanions per gram of sorbent, which is relatively low.

Recently, an increasing interest has been observed towards the use of a class of anionic clays known as layered double hydroxides (LDHs), or hydrotalcite-like compounds (HTIc), to remove inorganic contaminants such as oxyanions and monoatomic anions (e.g., fluoride, chloride, bromide, and iodide) from aqueous solutions by a process of adsorption and/or ion exchange.

LDHs are mineral materials having a layered clay-type structure. The structure of LDH materials arises from the structure of brucite, the mineral form of magnesium hydroxide with chemical formula Mg(OH)₂, in which divalent metal cations M²⁺ (said metal cations being octahedrally coordinated by hydroxyl groups) are isomorphously substituted by higher valence cations M³⁺ (such as Al³⁺). This substitution is generating positively charged brucite-type layers which are electro-neutralized by anions which, together with crystallization water molecules, are located in the interlayer region.

LDHs may typically be represented by the general formula [M²⁺₁₋ₓM³⁺ₓ(OH)₂]^{x+} (Aⁿ⁻_{x/n})·mH₂O, wherein M²⁺ are divalent cations (such as Mg²⁺, Zn²⁺, Ca²⁺, etc.), M³⁺ are trivalent cations (such as Al³⁺, Fe³⁺, Mn³⁺, etc.), the value of x is equal to the molar ratio of M³+/(M²⁺+M³⁺), and Aⁿ⁻are interlayer anions (or intercalated anions) with valence *n* (such as CO₃²⁻, NO₃⁻, etc.). The parent material of these anionic clays is the naturally occurring mineral hydrotalcite which has the formula Mg₆Al₂(OH)₁₆CO₃.4H₂O. LDH and LDO materials are typically specified (or grouped or named) based on the main cation composition, e.g., MgFe-LDH or Mg/Fe-LDH or MgFe-LDO or Mg/Fe-LDO. Alternatively, LDH and LDO materials are specified (or grouped or named) based on only one of the main cations, e.g., Fe-LDH or Fe-LDO.

LDH materials are endowed with excellent anion exchange abilities for a high number of inorganic anions (e.g., nitrate, sulphate, chromate, etc.) and organic anions (e.g., acetate, tartrate, carboxylate, etc.). Furthermore, LDHs are known for their thermal stability, their relatively high surface area, for being easy and economically viable to produce, and their low toxicity. This versatility of the LDH-type materials has already led to their application in many fields, for example for use as sorbents for (oxy)anions, as catalysts, catalysts precursors or catalytic supports, as nano-fillers for polymeric nanocomposites, as sensors, or in medicine as drug-carriers. However, a main concern in the application of LDHs as sorbent for (oxy)anions in the art is still related to their low stability in alkaline environment.

Wu et. al., 2015, describe the synthesis of a MgFe-LDH using a hydrothermal synthesis at a temperature of 80°C. In particular, Wu et al., disclose a nitrate containing Mg/Fe layered double hydroxides (Mg/Fe-LDHs) material was prepared via hydrothermal process and the calcination product (Mg/Fe-LDHO) was used as adsorbent. The hydrothermal process used in Wu et al., 2015, comprises forming the MgFe-LDH precipitate by addition of an alkaline solution and aging the formed precipitate for 24h at 80 °C in a reaction kettle. The MgFe-LDH thus obtained has the drawback of limited sorption characteristics and limited leaching stability at alkaline pH.

Accordingly, there is a desire to provide LDHs being stable at alkaline pH (low leaching) while retaining sorption capacity.

### SUMMARY OF THE INVENTION

In a first aspect, the present invention pertains to a method for producing an iron-based layered double hydroxide (Fe-LDH), said method comprising the steps of:
a) providing a base;
b) providing a metal salt solution comprising:
   - a first cation which is Fe³⁺;
   - at least one second metal cation which is different from said first cation,
c) contacting the base provided at step a) with the metal salt solution provided at step b) thereby obtaining a precipitate and a precipitation solution;
d) subjecting the precipitate obtained at step c) to aging, thereby obtaining an aged precipitate;
wherein step d) of aging is carried out at a temperature in the range from -25°C to 75°C, more preferably from 0°C to 60°C, most preferably from 5°C to 50°C, preferably in particular from 15°C to 30°C, more in particular from 20°C to 25°C, even more particularly at room temperature.

In a preferred embodiment, the aged precipitate obtained in step d) is recovered, to thereby obtain the Fe-LDH.

In a further aspect, the present invention pertains to a Fe-LDH obtainable according to the method of the present invention, having a specific surface area lower than 250 m²/g, preferably lower than 200 m²/g, more preferably lower than 150 m²/g, most preferably lower than 100 m²/g, in particular lower than 50 m²/g.

According to yet a further aspect, the present invention pertains to a method for producing an iron-based layered double oxide (Fe-LDO), said method comprising the steps:
a2) providing a Fe-LDH as obtained according to the method of the present invention and defined according to present invention;
b2) calcining the Fe-LDH provided at step a2) at a temperature in the range from 280°C to 700°C, preferably from 300°C to 650°C, more preferably from 400 °C to 600 °C, most preferably from 500°C to 550°C, thereby obtaining said Fe-LDO.

According to a further aspect, the present invention pertains to a Fe-LDO obtainable according to a method defined by the present invention.

According to a further aspect, the present invention pertains to the use of a Fe-LDH as described by the present invention, or a Fe-LDO as described by the present invention, as any one of a sorbent, a catalyst, a catalyst support, a filler or as a compound of a drug formulation.

It has been surprisingly found that a method according to the present invention is advantageous in that it provides for Fe-LDHs characterized by higher sorption capacity compared to the state of the art, and Fe-LDHs having improved stability in alkaline medium typically at a pH above 7, preferably above 10.

An advantage of the method of the present invention is that it may be carried out in mild reaction conditions which can be realized at room temperature, thereby avoiding the need for the heating of the precipitate in solution to an undesired temperature. In other words, the present invention provides a simplified method for synthesising Fe-LDH compared to the state-of-the-art whilst providing layered double hydroxides with improved characteristics. Further, the present invention provides for a more economical, less labour-intensive and more energy efficient synthesis method.

It has surprisingly been found that Fe-LDHs obtainable with the method of the present invention provide for a higher sorption capacity and a better selectivity towards vanadium sorption in high pH conditions as compared to the state-of-the-art. As evident from the examples hereinafter, such state-of-the-art hydrothermal conditions performed at temperatures of at least 80°C provide for a high specific surface area, still less adsorption capacity when compared to the materials obtained using the method of the present invention and with a low selectivity for vanadium when compared to the Fe-LDHs according to the present invention. In addition, using hydrothermal conditions with a temperature of at least 80°C, the aged Fe-LDHs only obtain a crystal structure and sorbent properties upon calcination.

A further advantage of Fe-LDH sorbent material that may be obtained according to the present invention is its being eco-friendly (non-toxic), and it's not requiring doping of the LDHs.

The substitution of Al³⁺ by Fe³⁺ in the method of this invention allows obtaining a material which is stable in high alkaline media, and thus allows for the application of the sorbent material directly in the alkaline streams (for example a pH of 13), with no need for reducing the pH of the stream before Fe-LDH sorption, thereby saving in materials and labour-costs. The degree of substitution of Al³⁺ by Fe³⁺ may vary within some limits, it may be partial, or it may be substantially complete.

### BRIEF DESCRIPTION OF THE DRAWINGS

Aspects of the invention will now be described in more detail with reference to the appended drawings, wherein same reference numerals illustrate same features and wherein:
**Figure 1****,** also referred to as **Fig. 1****,** illustrates XRD patterns indicating the formation of the crystalline Fe-based LDH structure according to the present invention as a function of coprecipitation for various pH values.
**Figure 2****,** also referred to as **Fig. 2****,** illustrates XRD patterns of LDHs synthesized according to the method of the present invention (samples #1 to #4, RT aging conditions) compared to those in the state-of-the-art (samples #5 to #6, hydrothermal synthesis at a temperature of 80°C).
**Figure 3****,** also referred to as **Fig. 3****,** illustrates the chromate adsorption efficiency and evolution of material stability as a function of pH for an LDH according to the present invention (MgFe-LDH) and one part of the state-of-the-art (MgAl-LDH).
**Figure 4****,** also referred to as **Fig. 4****,** illustrates the adsorption of V⁵⁺ in mixtures of 1/1 of Cr⁶⁺/V⁵⁺ by an LDH in the state-of-the-art (MgAl-LDH) and an LDH in accordance with the present invention (MgFe-LDH).
**Figure 5****,** also referred to as **Fig. 5****,** illustrates the sorption behaviour and selectivity for V⁵⁺ of an LDH according to the present invention compared to an LDH in the state-of-the-art, obtained via hydrothermal process at a temperature of 80°C. All tests were realized at pH 13 and Cr/V 1/1.
**Figure 6****,** also referred to as **Fig. 6****,** illustrates the adsorption of V⁵⁺ in mixtures of 1/1 of Cr⁶⁺/V⁵⁺ by various LDOs according to the present invention, and MgAl-LDOs in the state-of-the-art, at various pH values.

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the materials of the invention, the terms used are to be construed in accordance with the following definitions, unless a context dictates otherwise.

The term "about" or "approximately" as used herein when referring to a measurable value such as a parameter, an amount, a temporal duration, and the like, is meant to encompass variations of +/- 10 % or less, preferably +/- 5 % or less, more preferably +/- 1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed.

As used in the specification and the appended claims, the singular forms "a", "an", and "the" include plural referents unless the context clearly dictates otherwise. By way of example, "a base" means one base or more than one base.

In a first aspect, the present invention pertains to a method for producing an iron-based layered double hydroxide (Fe-LDH), said method comprising the steps of:
a) providing a base;
b) providing a metal salt solution comprising:
   - a first cation which is Fe³⁺;
   - at least one second metal cation which is different from said first cation,
c) contacting the base provided at step a) with the metal salt solution provided at step b) thereby obtaining a precipitate and a precipitation solution. With "precipitation solution" is meant the solution obtained after the metal salt solution and the base have been contacted with one another, also known as the supernate;
d) aging the precipitate obtained at step c), thereby obtaining an aged precipitate.
wherein step d) of aging is carried out at a temperature in the range from -25°C to 75°C, more preferably from 0°C to 60°C, most preferably from 5°C to 50°C, preferably in particular from 15°C to 30°C, more in particular from 20°C to 25°C, even more particularly at room temperature. In other words, during aging, the precipitation solution is maintained at a temperature in the range from -25°C to 75°C, preferably from 0°C to 60°C, more preferably from 5°C to 50°C, preferably in particular from 15°C to 30°C, more in particular from 20°C to 25°C, even more particularly at room temperature.

In a preferred embodiment, the method of this invention comprises a step e) of recovering the aged precipitate obtained in step d) thereby obtaining the Fe-LDH.

By means of the term "iron-based layered double hydroxide" or "Fe-LDH", reference is made to a layered double hydroxide (LDH), in which Al³⁺ has completely or partially been isomorphically substituted with Fe³⁺ ions. LDH, also called hydrotalcites, are a class of clay minerals having positive layers and negative exchangeable interlayer species that occur naturally, but may also be synthesized in laboratory conditions. The LDH-type materials are generally described by the chemical formula [M²⁺₁₋ₓM³⁺ₓ(OH)₂]^{x+} (Aⁿ⁻_{x/n}) mH₂O, where: M²⁺ are divalent cations, such as but not limited to, Mg²⁺, Zn²⁺, Ca²⁺, Ni²⁺, and M³⁺ are trivalent cations, such as but not limited to, Al³⁺, Fe³⁺, Mn³⁺, and Aⁿ⁻ are interlayer anions, such as but not limited to, CO₃²⁻, NO₃⁻.

Therefore, the method according to the present invention, for the production of Fe-LDHs comprises a first step a) of providing a base. According to yet a further embodiment of the invention, the base may be provided as an alkaline solution of a base selected from the list: ammonia, KOH, NaOH, or any mixture thereof. According to an alternative embodiment of the invention, the alkaline solution may be provided as an ammonia solution. The use of an ammonia solution has the advantage that the final LDH has interlayer nitrate anions, this is due to the ammonia favouring nitrate intercalation rather than carbonate intercalation which is often regarded as a form of contamination. The use of NaOH often results in LDHs with a combination of interlayer nitrate and carbonate, because carbonate contamination can't be avoided. Therefore, by means of the use of an ammonia solution the obtained Fe-LDH material has predominantly intercalated nitrate anions.

The Fe-LDHs and Fe-LDOs of the present invention can optionally be further doped if the Fe-LDHs and Fe-LDOs are to be used in specific applications favouring from said doping, such as when the Fe-LDHs and Fe-LDOs are to be used as catalysts. Doping of the Fe-LDHs and Fe-LDOs can be accomplished by allowing one or more metal ions to intercalate within the Fe-LDH or Fe-LDO structure. Metal ions functioning as dopants include divalent cations, such as but not limited to, Cu²⁺, Zn²⁺, Ni²⁺, and Co²⁺, trivalent cations, such as but not limited to, Mn³⁺, La³⁺, or trivalent cations of other rare earth elements, or even tetravalent cations, such as but not limited to, Ti⁴⁺, Zr⁴⁺. The selection of the doping ion would depend on the Fe-LDHs or Fe-LDOs field of application. In order to accomplish the doping, the metal salt solution may be contacted with one or more salts comprising the doping ions.

Further, the method of this invention comprises a step b) of providing a metal salt solution comprising a first cation, which is Fe³⁺, and a second cation different from said first cation.

By means of the term "metal salt solution", reference is made to a solution, such as an aqueous solution comprising at least one metal salt dissolved therein. According to the present invention, the method for obtaining the Fe-LDH comprises providing a metal salt solution comprising a first cation which is Fe³⁺, at least one second metal cation which is different from said first cation. In obtaining the metal salt solution, the at least one second metal cation which is different from said first cation, can be added to a metal salt solution comprising a first cation which is Fe³⁺, or vice versa, or the solution can be made from a mixture of metal salts of a first cation which is Fe³⁺, and at least one second metal cation which is different from said first cation.

In an aspect of the invention, the metal salt solution may contain one or more of water, one or more alcohols, one or more ionic liquids, one or more deep eutectic solvents, and combinations thereof. The metal salt solution according to the present invention is generally an aqueous solution, nevertheless, hydroalcoholic solutions may also be used.

The substitution of Al³⁺ by Fe³⁺in Fe-LDHs achieved by the present invention, allows obtaining a material with a high stability in high alkaline media, and thus allows the application of the sorbent material directly in alkaline streams (up to pH 13), with no need of prior reduction of pH. The present invention has the advantage that a virtually complete substitution of Al³⁺ by Fe³⁺ may be achieved.

The metal salts solution comprises cations and anions. The anions in the metal salt may be either inorganic, such as but not limited to, nitrates, chlorides, but they may also be organic, such as and not limited to, acetates. Advantageously, the anions present in the metal salts solution comprise one or more of hydroxide (OH⁻), nitrate (NO³⁻), bromide (Br), chloride (Cl⁻), or fluoride (F⁻). Preferably the anions present in the metal salts solution are selected from one or more of hydroxide, nitrate and chloride. In a method of the invention, the anions present in the solution of metal salts form the interlayer anions in the interlayer region between the brucite-like sheets of the LDH material.

More advantageously, the metal salt solution comprises (or consists of) CaCl₂.2H₂O (calcium chloride dihydrate) and Fe(NO₃)₃.9H₂O) (ferric nitrate nonahydrate). Alternatively, the f metal salts solution comprises (or consists of) Mg(NO₃)₂.6H₂O (magnesium nitrate hexahydrate) and Fe(NO₃)₃.9H₂O (ferric nitrate nonahydrate). In yet another alternative embodiment, the metal salts solution comprises (or consists of) Zn(NO₃)₂.6H₂O (zinc nitrate hexahydrate) and Fe(NO₃)₃.9H₂O (ferric nitrate nonahydrate).

According to an embodiment of the invention, the second cation is selected from one or more of Ca²⁺and Mg²⁺, but preferably the second cation is Mg²⁺. According to a further embodiment of the invention, the second cation is provided in a molar ratio of second cation to first cation from 1.1 to 6, preferably from 2 to 5, more preferably from 2.5 to 3.5. Thereby, care should be taken that an optimal balance is achieved between increasing the cationic ratio on the one hand and affecting the anionic exchange capacity to the smallest possible extent on the other hand. Increasing the cationic ratio namely risks to decrease the anionic exchange capacity because of the decreasing positive charges on the LDH layers.

Further, the method according to the present invention comprises a step c) of contacting the base with the metal salt solution. Contacting the alkaline solution and the solution of metal salts in step c) may be carried out according to any suitable method, for example by adding the alkaline solution to the solution of the metal salts or by adding the solution of the metal salts to the alkaline solution. Advantageously, the alkaline solution is added to the solution of the metal salts. Step c) of contacting the alkaline solution with the metal salt solution induces the formation of a precipitate and a precipitation solution, which is the solution formed after the precipitate was formed, also known as supernate.

The alkaline solution (or the solution of the metal salts) is added in such a way that the pH of the solution formed in step c) is maintained at a constant value. More advantageously, the rate of adding the alkaline solution to the metal salts solution (or of adding the metal salts solution to the alkaline solution) is set so as to maintain the pH of the solution formed in said step at a constant value. Alternatively, the metal salts and alkaline solutions are added at the same time, still in such a way that the pH of the solution formed in step c) is maintained at a constant value. With maintaining at a constant value is meant that the rate of adding is adapted in such a way that pH variations are kept within acceptable limits, i.e., +/- 0.5 of the desired pH value. The adding can be performed dropwise or any other suitable technique. Advantageously, the speed of adding is 5 to 10mL/min per litre solution of metal salts (or 5 to 10mL/min per litre of alkaline solution when adding the solution of metal salts to the alkaline solution).

In an embodiment of the present invention, step c) comprises maintaining the pH of the precipitation solution at a pH higher than 8.5, preferably higher than 9.0, more preferably the pH is higher than 9.5. In general, the pH will be maintained below 11. It has been surprisingly found that in accordance with the present embodiment, the crystallinity of the obtained Fe-LDHs is highly improved, in particular the amount of crystalline material in the precipitate may be increased, whereas the amount of amorphous material in the precipitate may be reduced when compared to the prior art process.

According to a further embodiment, step c) comprises obtaining the precipitate at a temperature in a range from - 25°C to 95°C, preferably from -10°C to 75°C, more preferably from 0°C to 60°C, most preferably from 5°C to 50°C, in particular from 15°C to 30°C, more in particular from 20°C to 25°C, even more particularly at room temperature. By means of the term "room temperature" or "RT", reference is made to the generally accepted meaning as a thermometer reading of a given space that is 'suitable for long term human occupancy and/or laboratory experimentation', in pharmaceutical industry for example set at a temperature of about 20 to 25°C, with an average temperature of about 23°C.

According to a further embodiment, step c) comprises maintaining the precipitation solution under agitation tfor at least 1 hour, preferably at least 4 hours; in particular between 1 hours and 15 days, more in particular from 4 hours to 10 days, preferably from 4 hours to 24 hours.

Methods of the present invention are performed preferably in the absence of carbonates (e.g., Na₂CO₃). The concentration of any Na₂CO₃ in the metal salt solution is preferably kept as low as possible. Carbonates may for example be present as an impurity in the metal salts, may be added on purpose, or may originate from contamination by air or water.

It has been found that the use of ammonia permits minimising the risk to unwanted contamination for example by carbonates, without having to apply special circumstances, like carrying out the reaction in inert atmosphere and the like.

After step c), the method according to the present invention comprises the step d) of aging the precipitate obtained at step c) while in contact with the solution, thereby obtaining an aged precipitate.

By means of the term "aging", also known as "ageing", or "ripening", reference is made to the process of leaving a freshly formed precipitate in the solution from which it precipitates (the precipitation solution), for a certain amount of time. In other words, during the aging step, the precipitate and the precipitation solution are kept in contact with each other for a period of time. The aging step according to the present invention is carried out at a temperature in the range from -25°C to 75°C, more preferably from 0°C to 60°C, most preferably from 5°C to 50°C, preferably in particular from 15°C to 30°C, more in particular from 20°C to 25°C, even more particularly at room temperature. The step of aging at a temperature in the range from - 25°C to 75°C, more preferably from 0°C to 60°C, most preferably from 5°C to 50°C, preferably in particular from 15°C to 30°C, more in particular from 20°C to 25°C, even more particularly at room temperature, results in crystallized particles with a higher purity and a larger crystal size.

Advantageously, the step of aging the precipitate (step d)) comprises aging the precipitate for at least 1 hour, preferably at least 4 hours; in particular between 1 hours and 15 days, more in particular from 4 hours to 10 days, preferably from 4 hours to 24 hours.

According to yet a further embodiment, step d) comprises maintaining the pH of the precipitation solution at a pH higher than 8.5, preferably higher than 9.0, preferably higher than 9.5. In general, the pH will be maintained below 11. It has been surprisingly found that ageing at a pH between these values, Fe-LDHs with higher crystallinity may be obtained.

Further, after the aging step, the method of the present invention comprises step e) of recovering the aged precipitate obtained. According to the present step e), the aged precipitate can be recovered by separating it from the precipitation solution. Advantageously, according to the present embodiment, the aged precipitate Fe-LDH material is separated from the precipitation solution by filtration or centrifugation.

After the recovering step, the precipitate may optionally be washed and dried to obtain a powdered Fe-LDH material. Washing may be carried out one or more times. Usually washing will be carried out using distilled water.

After the aged, and preferably washed, precipitate has been recovered, the precipitate may be dried. It should be clear to the skilled person that drying of the precipitate is not mandatory. In particular, after separation and/or washing, the Fe-LDH can be used as a wet cake. Using the Fe-LDH as a wet cake is advantageous in that it allows for reducing both time and energy consumption during the production of the Fe-LDH. It should further be clear that drying may be carried out to a smaller or larger extent, i.e., solvent may be removed to a smaller or larger extent.

According to an embodiment of the present invention, the method may further comprise a step f) of drying the recovered aged precipitate from step e). The drying step f) can be accomplished by means of various drying techniques in the state-of-the-art, such as heat drying, vacuum drying and freeze drying or a combination thereof. When the recovered aged precipitate is heat dried, the drying is preferably performed at a temperature comprised between 10°C and 150°C, advantageously between room temperature and 80°C, for 1 to 48 hours. More advantageously, the drying of the precipitate is performed between room temperature and 60 °C, for 2 to 24 hours.

The method for producing a Fe-LDH according to the present invention is simple and economic, and may be realized in atmospheric conditions and/or in non-hydrothermal conditions, for example, without the need for heating the precipitate in contact with the precipitation solution.

By means of the method of the present invention, Fe-LDHs having beneficial properties can be obtained. Fe-LDHs obtained by the present method are characterized by a specific surface area lower than 250 m²/g, preferably lower than 200 m²/g, more preferably lower than 150 m²/g, most preferably lower than 100 m²/g, in particular lower than 50 m²/g. It has been observed that faster adsorption kinetics may be achieved, and/or a higher sorption capacity, and/or superior selectivity. It has further surprisingly been found that Fe-LDHs according to the present invention provide for better selectivity towards vanadium sorption at a pH above 7, preferably above 10, as compared with similar materials synthesized in accordance with methods in the state of the art.

According to a further aspect, the present invention pertains to a Fe-LDH obtainable according to a method defined according to the present invention, having a specific surface area lower than 250 m²/g, preferably lower than 200 m²/g, more preferably lower than 150 m²/g, most preferably lower than 100 m²/g, in particular lower than 50 m²/g. By means of the term "BET surface area", or "specific surface area" or "SSA", reference is made to total surface area of a material per unit of mass. BET surface areas values of the present invention have been calculated based on the BET method using N₂ sorption at -196°C.

A further advantage of Fe-LDH materials according to the present invention is their being eco-friendly (non-toxic).

According to a further embodiment, the Fe-LDH has a crystal size of from 5 to 75 nm, more preferably from 5 to 50 nm, most preferably from 7.5 to 25 nm, in particular from 10 nm to 12 nm. By means of the term "crystal size", reference is made to the crystal size calculated in accordance with the Scherrer equation (see Patterson, A., 1939) applied to the X-ray diffraction peaks assigned to the (003) and (006) planes.

According to a further aspect, the present invention pertains to a method for producing an iron-based layered double oxide (Fe-LDO), said method comprising the steps:
a2) providing a Fe-LDH as defined according to the present invention, or obtained according to the method of the present invention;
b2) calcining the Fe-LDH provided at step a2) at a temperature in the range from 280°C to 700°C, preferably from 300°C to 650°C, more preferably from 400 °C to 600 °C, most preferably from 500°C to 550°C, thereby obtaining said Fe-LDO.

Therefore, the present aspect pertains to a method for producing Fe-LDOs. In the present method, Fe-LDHs as defined by the present invention are provided and are then subjected to a calcination step after which Fe-LDO is obtained.

According to an embodiment of the present invention, step b2) of calcining the Fe-LDH provided at step a2) is for at least 1 hour, preferably at least 4 hours; in particular between 1 hours and 15 days, more in particular from 4 hours to 10 days, preferably from 4 hours to 24 hours.

According to a further aspect, the present invention pertains to a Fe-LDO obtainable according to the method for producing a Fe-LDO as described by the present invention.

According to a further aspect, the present invention pertains to the use of a Fe-LDH as described by the present invention, or a Fe-LDO as described by the present invention, as any one of a sorbent, a catalyst, a catalyst support, a filler or as a compound of a drug formulation. According to a further embodiment of the present invention, the Fe-LDH and Fe-LDO as described by the present invention are preferably used as sorbents.

Advantageously, the Fe-LDHs and Fe-LDOs of the present invention are used as sorbent for heavy metal anions, advantageously as sorbent for heavy metal oxyanions. In the context of the present application, the term oxyanion refers to an ion with generic formula AₓO_{y}^{z-}, where A represents a chemical element and O represents an oxygen atom. Examples of oxyanions comprise, and are not limited to, arsenite, arsenate, chromate, phosphate, selenite, selenate, vanadate, molibdate, manganate, borate, nitrate, etc. The term (heavy) metal oxyanion refers to an ion with generic formula AₓO_{y}^{z-}, where the element A represents a (heavy) metal chemical element and O represents an oxygen atom.

According to a preferred embodiment of the present invention, the use of a Fe-LDH or a Fe-LDO as described by the present invention is for the sorption of ions selected from the list: vanadium ions, phosphates, arsenates, molybdates, fluorides, chromium ions, antimony ions, tantalum ions, tungsten ions, niobium ions. According to a further embodiment of the present invention, the Fe-LDH or Fe-LDO of the present invention are used for sorption of vanadium anions, preferably in mixtures with chromium ions. The Fe-LDHs and Fe-LDOs of the present invention can also be advantageously used for CO₂ capture.

Advantageously, the Fe-LDHs and Fe-LDOs of the present invention can be further used as fillers for improving the UV resistance, fire resistance and temperature stability of materials, such as polymers comprising said Fe-LDHs and Fe-LDOs. Further, Fe-LDHs and Fe-LDOs of the present invention can be advantageously further used as scavenger fillers, e.g., halogen scavenger fillers for e.g., polymeric materials.

Further, the Fe-LDHs and Fe-LDOs of the present invention can be used as compounds of a drug formulation. Suitable medical applications include but are not limited to, treatment of Fe deficiency, use as anti-acid.

The use as a sorbent, a catalyst or a catalyst support of the Fe-LDH according to the present invention is at a pH higher than 7, preferably higher than 10, more preferably higher preferably than 12.

### EXPERIMENTAL PART

### MATERIALS AND METHODS

The following abbreviation are used in the present Experimental Part: FD stands for freeze dried, RT stands for room temperature, LDH stands for layered double hydroxide, LDO stands for layered double oxide, SSA stands for specific surface area.

### SYNTHESIS

### EXAMPLE 1: Synthesis Fe-LDH according to the present invention

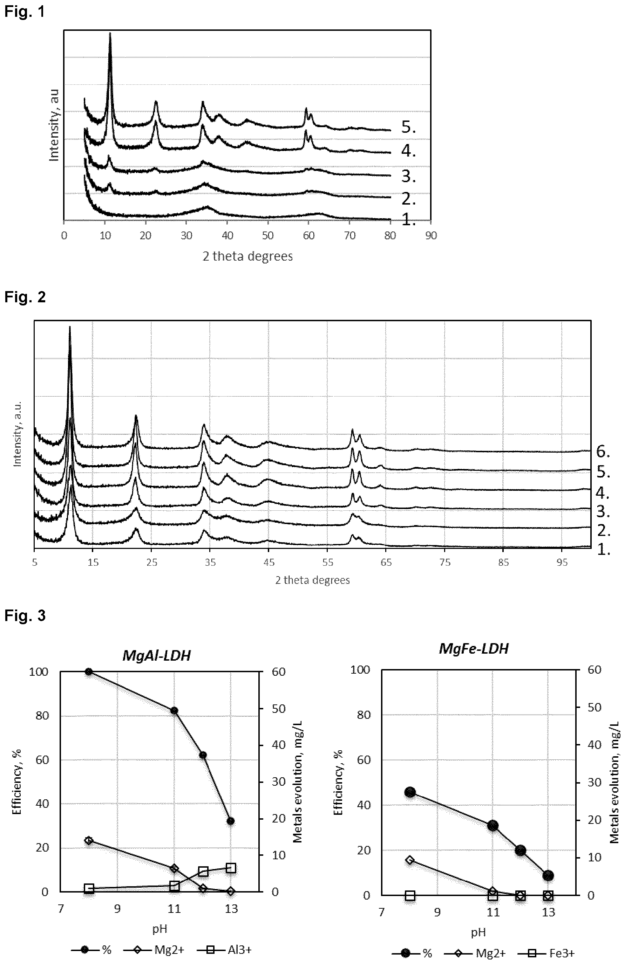

An aqueous ammonia solution (25wt% NH₃) as basic coprecipitation agent is slowly added to a mixed solution of metal precursor salts, namely 0.75M Mg(NO₃)₂.6H₂O and 0.25M Fe(NO₃)₃.9H₂O for a cationic ratio of 3 (1M in total), at RT conditions, maintaining the pH at a constant value of 10 (above 9.5). The resultant precipitate is aged at RT for 24h, separated by filtration, washed with distilled water and dried in an oven at 80°C for 24h to obtain the powdered material. The obtained materials have LDH structure with interlayer nitrate anions. LDOs are obtained by the LDH calcination at 550°C for 4h. Both non-calcined (LDH) and calcined materials (LDO) at 550°C are tested for sorption performance and selectivity in mixtures of Cr⁶⁺/V⁵⁺ solutions at various pH values. The coprecipitation pH was investigated for obtaining a crystalline structure. As it is demonstrated from the XRD patterns in **Fig.1****,** a crystalline structure is obtained when coprecipitation is performed at a pH equal to or greater than 9. **Fig.1** illustrates XRD patterns indicating the formation of the crystalline Fe-based LDH structure as a function of coprecipitation pH. In particular, the XRD patterns 1-5 in **Fig. 1** are: 1 corresponds to Fe-LDH of the present example obtained for coprecipitation pH 8; 2 corresponds to Fe-LDH of the present example obtained for coprecipitation pH 8.5; 3 corresponds to Fe-LDH of the present example obtained for coprecipitation pH 9; 4 corresponds to Fe-LDH of the present example obtained for coprecipitation pH 9.5 and 5 corresponds to Fe-LDH of the present example obtained for coprecipitation pH 10.

### EXAMPLE 2: Synthesis Fe-LDH according to the present invention using different drying conditions

A mixed solution (1M in total) of metal precursor salts Mg(NO₃)₂.6H₂O and Fe(NO₃)₃.9H₂O in a Mg/Fe molar ratio of three (3) was coprecipitated by the addition of 25wt% NH₃ aqueous solution while maintaining the pH at 10 - 10.5. After stirring for 1 h, the precipitate formed was aged for 24 h at room temperature (samples numbers 1, 2, 3 and 4 in Table 1) upon which the precipitate was separated by filtration. The wet cake was washed with deionized water until the pH of the filtrate became neutral, and was then freeze dried for 24 h (sample numbers 1 and 2 in Table 1) or dried at 80°C for 24 h (sample numbers 3 and 4 in Table 1) to obtain MgFe-LDHs.

### EXAMPLE 3: Synthesis Fe-LDH at 80°C (state-of-the-art) using different base solutions

For comparative examples, MgFe-LDH was synthesized via a hydrothermal synthesis described in Wu et al., 2015 involving a hydrothermal aging step at 80°C and according to the method of the current invention involving aging at room temperature. As the identity of the basic solution used for the precipitation step described in Wu et al., 2015 is not disclosed, the synthesis was performed using NaOH (the most widely used coprecipitation agent for LDH synthesis) and using an aqueous ammonia (25wt% NH₃) solution (similar as in Example 2). The mixed solution (1M in total) of metal precursor salts Mg(NO₃)₂.6H₂O and Fe(NO₃)₃.9H₂O in a Mg/Fe molar ratio of three (3) was coprecipitated respectively by the addition of NaOH (sample number 6 in Table 1) and the 25wt% NH₃ aqueous solution (sample number 5 in Table 1), maintaining the pH at 10 - 10.5. After stirring for 1 h, the precipitate formed was aged for 24 h at 80°C in a reaction vessel, at end of which the precipitate was separated by filtration. The wet cake was washed with deionized water until the pH of the filtrate became neutral, and then was dried at 80°C for 24 h to obtain MgFe-LDHs.

### Characterization

### Chemical composition of the synthesized material

The Fe-LDHs synthesized according to the methodologies in Examples 1 and 2, are characterized by a Mg/Fe ratio of 3 as determined by ICP. Further chemical composition data can be found here below:

| Identification sample | Calculated x | Calculated 1-x | M^{II}/M^{III} Mg/Fe | calculated chemical formula of the brucite-like sheets |
|---|---|---|---|---|
| MgFe-LDH (ratio 3) | 0.2476 ±0.0093 | 0.7524 ±0.0093 | 3.0388 ±0.1493 | M g_{0.7524±0.0093}Fe_{0.2476±0.0093} |

where x = M^{III}/(M^{II}+M^{III}).

### Structural investigation by XRD

X-ray diffraction (XRD) recorded on a PANalytical X'Pert PRO MPD diffractometer with filtered CuKα radiation; measurements were done in the 2θ mode using a bracket sample holder with a scanning speed of 0.04°/4 s in continuous mode. The structure has been confirmed by XRD. Unit cell parameters for the obtained materials are available in Table 1, and the respective XRD patterns in **Fig. 2****.** The interlayer anions are nitrates (NO₃⁻) as indicated by the calculated values of the unit cell parameter c(Å) (see also Table 1).

**Fig. 2** illustrates XRD patterns of the MgFe-LDH materials obtained at pH 10, using various aging conditions (RT and 80°C), coprecipitation agent (NH₃ and NaOH), and drying methods (heat dried, freeze dried). In particular, samples #1 to #4 correspond to Fe-LDHs according to the method of the present invention and have been synthesized according to the methodology in Example 2. For samples #1 to #4, the aging was performed at RT and the coprecipitation agent used is ammonia. Samples #1 and #2 have been further subjected to a freeze-drying step, whereas samples #3 and #4 have been subjected to heat drying at 80°C. On the other hand, samples #5 and #6 have been synthesized according to the methodology in Example 3. In contrast with #1 to #4, samples #5 and #6 have been obtained via hydrothermal process at a temperature of 80°C.

**Table 1 here below illustrates the unit cell parameters calculated from the XRD patterns.**

| # | Sample details | Aging conditions | Coprecipitation agent | Unit cell parameters: 1phase | |
|---|---|---|---|---|---|
| | | | | a(Å) | c(Å) |
| | | | | | |
| 1. | Mg/Fe = 3 Freeze dried powder | RT | Ammonia solution (25wt%NH₃) | 3.11 | 23.90 |
| 2. | Mg/Fe = 3 Freeze dried powder | RT | Ammonia solution (25wt%NH₃) | 3.12 | 23.98 |
| 3. | Mg/Fe = 3 80°C dried powder | RT | Ammonia solution (25wt%NH₃) | 3.13 | 24.02 |
| 4. | Mg/Fe = 3 80°C dried powder | RT | Ammonia solution (25wt%NH₃) | 3.13 | 24.32 |
| 5. | Mg/Fe = 3 80°C dried powder (State-of-the-art Wu et al., 2015) | 80°C, hydrothermal conditions | Ammonia solution (25wt%NH₃) | 3.12 | 24.00 |
| 6. | Mg/Fe = 3 80°C dried powder (State-of-the-art Wu et al., 2015) | 80°C, hydrothermal conditions | NaOH 1M | 3.12 | 23.995 |

### Measurement of specific surface area

Porosity and surface area studies were performed on a Quantachrome^{®} ASiQwin^{™} automated gas sorption system using nitrogen (N₂) as the adsorbate at liquid nitrogen temperature (-196 °C). Prior to the measurements, an outgassing step was performed under vacuum for 48 h at 60°C. The surface area was calculated using the BET method in the range of relative pressure 0.05-0.35. The specific surface areas (SSA) are given in Table 2 for Fe-LDHs samples #1, #3, #5, #6.

**Table 2 here below illustrates SSA measured using N₂ sorption for some of the LDHs which unit cell parameters are shown in Table 1.**

| # | Aging conditions | Coprecipitation agent | SSA |
|---|---|---|---|
| | | | m²/g |
| 1. | RT | Ammonia solution (25wt%NH₃) | 40 |
| 3. | RT | Ammonia solution (25wt%NH₃) | 38 |
| 5. | 80°C, hydrothermal conditions | Ammonia solution (25wt%NH₃) | 110 |
| 6. | 80°C, hydrothermal conditions | NaOH 1M | 130 |

### Measurement of sorption performances

The LDH-type materials may adsorb (oxy)anions via anionic exchange mechanism. The interlayer anions may be replaced by new anions and this phenomenon is controlled by the anionic affinity for LDHs which is reported to be in the following order: NO₃⁻ < Br < Cl⁻ < F⁻ < OH⁻ < SO₄²⁻ < CrO₄²⁻ < HASO₄²⁻ < HPO₄²⁻ < CO₃²⁻, with preferential affinity for the anions with higher valence rather than monovalent state.

The LDO-type materials may also adsorb (oxy)anions via memory effect property. This can be described as a unique property of LDHs which consists in structural reconstruction of the original layered structure after being calcined and placed in contact with aqueous solutions containing the desired anions.

### Sorption on non-calcined MgFe-LDH

### Sorption of single anions

Sorption performance is influenced by the type of metals isomorphously substituted in the brucite-like sheets (e. g. Mg²⁺, Fe³⁺...) and intercalated anion: nitrate anions (NO₃⁻) can be easily exchanged with the chromate anions (CrO₄²⁻) or vanadate anions (VO₄³⁻). The order for anion affinity for the LDH is in the following order: NO₃⁻ < Br⁻ < Cl⁻ < F⁻ < OH⁻ < SO₄²⁻ < CrO₄²⁻< HAsO₄²⁻ < HPO₄²⁻ < CO₃²⁻. As a general rule, the higher charge anions have higher affinity for the LDH as the lower charge anions. Also, other types of hydrotalcite-type materials (example MgAl-LDH) are tested for comparison and benchmarking (see **Fig. 3** for chromate adsorption).

**Fig. 3** illustrates chromate adsorption efficiency, indicated as a percentage with symbol %, and evolution of material stability as a function of pH.

The increase of pH greatly affects the sorption performances which decreases with increasing pH (from 8 to 13) due to decreasing material stability indicated by increased metals evolution and competition with the OH anions. The MgFe-LDH shows less chromate adsorption efficiency as compared with MgAl-LDH type correspondent, but the material stability is not affected in high alkaline conditions (pH 11 to 13) indicated by near zero metals evolution. This is due to the total isomorphic substitution of Al³⁺ with Fe³⁺ within the brucite-like sheets which offers the material stability in high alkaline conditions.

### Competitive sorption in aqueous alkaline mixtures of Cr⁶⁺/V⁵⁺ - selectivity towards V⁵⁺ oxyanions

The competitive sorption and selectivity towards vanadate anions are tested in complex solutions containing Cr⁶⁺ (as CrO₄²⁻) and V⁵⁺ (as VO₄³⁻) in ratio of 1 to 1 at high alkaline pH (pH 13). In the case of more complex solutions, when both chromates and vanadates coexist, the vanadate anions are adsorbed selectively based on charge affinity, e. g. vanadates (VO₄³⁻) have higher charge than the chromates (CrO₄²⁻).

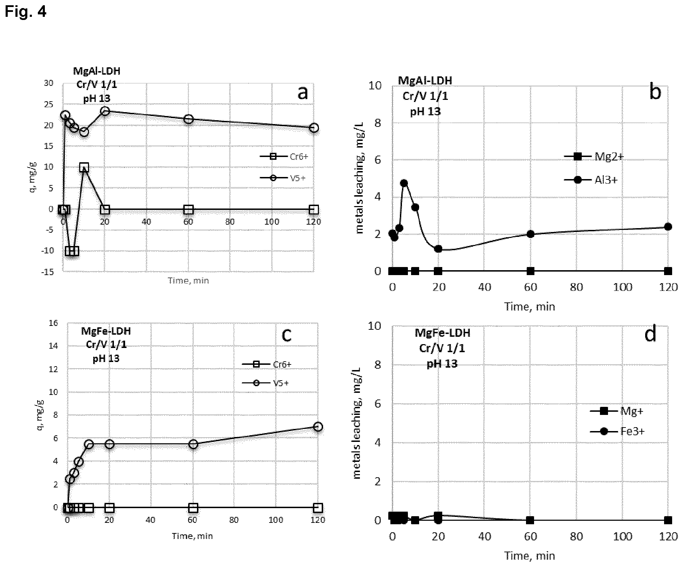

**Fig. 4** illustrates the selective adsorption of V⁵⁺ in mixtures of 1/1 of Cr⁶⁺/V⁵⁺ **(****Fig. 4a** and **Fig. 4c****)** and leaching behavior **(****Fig. 4b** and **Fig. 4d****).** In particular, **Fig. 4a** illustrates the absorption of Cr⁶⁺/V⁵⁺ for MgAl-LDH, wherein **Fig. 4b** illustrates the investigation of metals evolution due to leaching (Mg²⁺ and Al³⁺ leaching) and **Fig. 4c** illustrates the selective absorption of Cr⁶⁺/V⁵⁺ for MgFe-LDH according to the present invention, with **Fig. 4d** illustrating the investigation of metals evolution due to leaching (Mg²⁺ and Fe³⁺ leaching). It is clear from **Fig. 4a** and **Fig. 4c****,** that Fe-LDHs according to the present invention possess sorption selectivity towards V⁵⁺ in Cr/V mixed solutions at high pH, and alkaline stability. MgAl-LDHs lack these combined characteristics.

Further, based on the results obtained and illustrated in **Fig. 4****,** it is clear that the adsorption capacity of MgFe-LDH (of ~6mg/g) is lower than of MgAl-LDH (~20mg/g) but the MgAl-LDH is not stable at pH 13 due to Al³⁺ leaching (see **Fig. 4b****).** No metals are leaching from the MgFe-LDH structure (see **Fig. 4d****).**

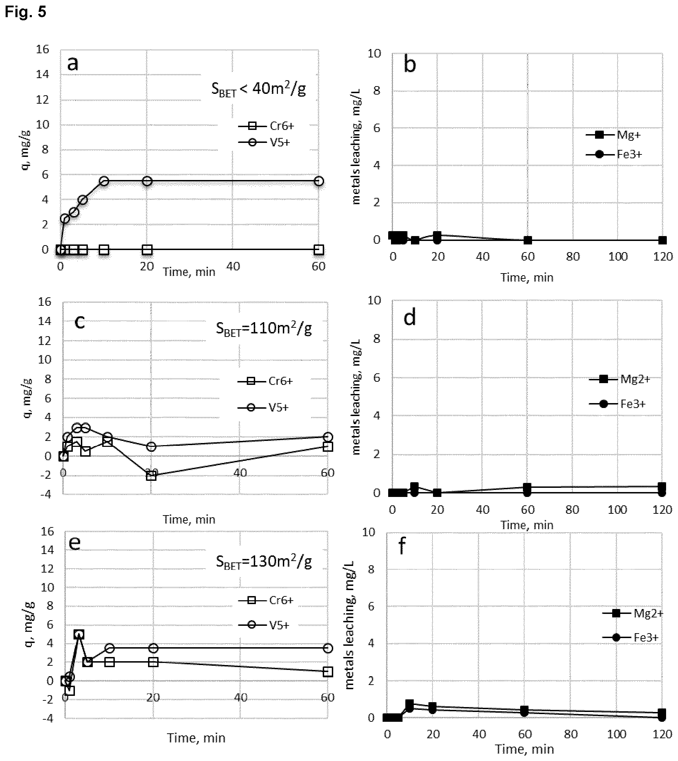

MgFe-LDHs obtained using the hydrothermal process at 80°C in the state of the art, as obtained by coprecipitation both with ammonia solution and NaOH solution were also investigated for their sorption behavior and selectivity towards V⁵⁺ in Cr/V 1/1 mixed solutions at pH 13. The adsorption results are included in **Fig. 5****.** In particular, **Fig. 5** illustrates comparative sorption behavior and selectivity for V⁵⁺ of a Fe-LDH according to the present invention (see **Fig. 5a****),** compared to a Fe-LDH obtained via hydrothermal process at 80°C, with NH₃ as coprecipitation agent (see **Fig. 5c****),** and NaOH solution (see **Fig. 5e****).** All tests were realized at pH 13 and Cr/V 1/1.

The adsorption data demonstrates that the Fe-LDH according to the present invention having lower specific surface area is endowed with better sorption characteristics and selectivity to V⁵⁺ **(****Fig. 5a****)** as compared with similar materials obtained via the hydrothermal method at 80°C, although these are characterized by higher specific surface area **(****Fig. 5c** and **Fig. 5e****).** Investigation of metals leaching from the LDH structure shows that no Mg²⁺ or Fe³⁺ are leached from the structure of the Fe-LDH according to the present invention **(****Fig. 5b****),** while some (minimum) amounts of metals, e. g. up to 0.3 - 0.4mg/L of Mg²⁺ and 0.2 - 0.3 mg Fe³⁺/L are released as a function of time from the Fe-LDHs obtained via methods in the state of the art, see **Fig. 5d** (for Fe-LDH obtained via coprecipitation with NH₃) and **Fig. 5f** (for Fe-LDH obtained via coprecipitation with NaOH), respectively.

### Competitive sorption on LDOs (calcined at 550°C)

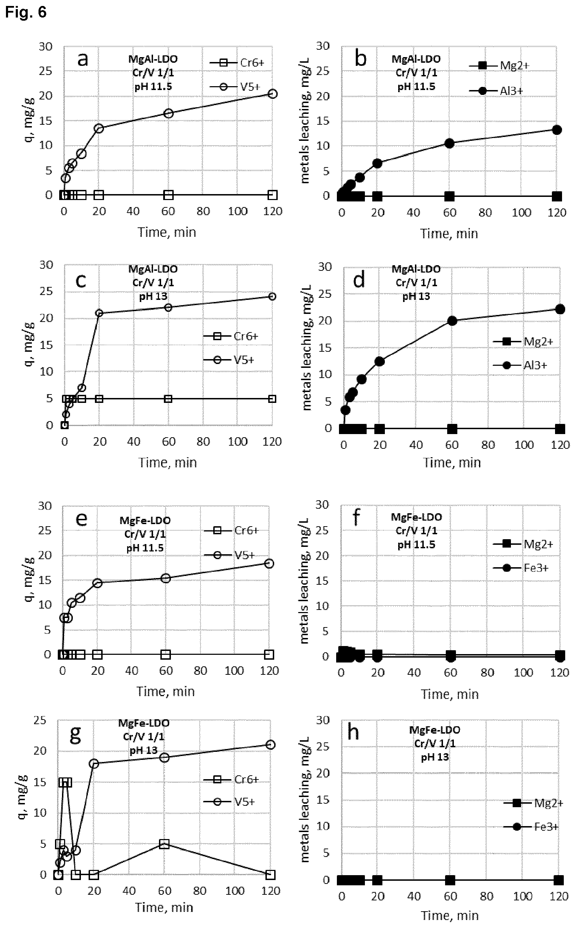

The calcination of the Fe-LDHs according to the present invention up to 550°C leads to the formation of the correspondent layered double oxide (MgFe-LDO) which can adsorb the V⁵⁺ anions via the memory effect mechanism as illustrated in **Fig. 4****.** The selectivity for V⁵⁺ and alkaline stability is demonstrated for the MgFe-LDO according to the present invention in complex solutions containing Cr⁶⁺ (as CrO₄²⁻) and V⁵⁺ (as VO₄³⁻) in ratio of 1 to 1 at high alkaline pH (pH 11.5 and 13). **Fig. 6** shows the adsorption behavior data and the metal leaching analysis (correlated with the alkaline stability) of the LDOs obtained by calcination at 550°C of the Fe-LDHs according to the present invention (see **Fig. 6e, Fig. 6f, Fig. 6g, Fig. 6h****)** according to the present invention compared with the MgAl-LDO structure (see **Fig. 6a, Fig. 6b, Fig. 6c, Fig. 6d****).**

In particular, **Fig. 6a** illustrates the adsorption of V⁵⁺ in mixtures of 1/1 of Cr⁶⁺/V⁵⁺ by using MgAl-LDO at pH 11.5 with **Fig. 6b** illustrating the investigation of metals leaching at pH 11.5. Further, **Fig. 6c** illustrates the absorption of MgAl-LDO at pH 13 with **Fig. 6d** illustrating the investigation of metals leaching at pH 13. Finally, **Fig. 6e** illustrates selective absorption using an LDO according to the present invention, MgFe-LDO, at pH 11.5, wherein **Fig. 6f** illustrates investigation of metals leaching for said MgFe-LDO at pH 11.5 and **Fig. 6g** illustrates selective absorption of the same MgFe-LDO according to the present invention at pH 13 with **Fig. 6h** illustrating the investigation of metals leaching at pH 13.

The adsorption capacity of MgFe-LDO is similar as observed for MgAl-LDO in both pH ranges (pH 11.5 and pH13) but the MgAl-LDO is not stable in both pH ranges due to Al³⁺ leaching (see **Fig. 6b** and **Fig. 6d****).** No metals are leaching from the MgFe-LDH structure (see **Fig. 6f** and **Fig. 6h****).**

### REFERENCES

1. Wu et al., 2015: Wu, Tao, Lili Mao, and Haizeng Wang. "Adsorption of fluoride on Mg/Fe layered double hydroxides material prepared via hydrothermal process." Rsc Advances 5.30 (2015): 23246-23254.
2. Patterson, A. (1939). "The Scherrer Formula for X-Ray Particle Size Determination". Phys. Rev. 56 (10): 978-982.

## Claims

1. A method for producing an iron-based layered double hydroxide (Fe-LDH), said method comprising the steps of:
a) providing a base;
b) providing a metal salt solution comprising:
- a first cation which is Fe³⁺;
- at least one second metal cation which is different from said first cation,
c) contacting the base provided at step a) with the metal salt solution provided at step b) thereby obtaining a precipitate and a precipitation solution;
d) subjecting the precipitate obtained at step c) to ageing , thereby obtaining an aged precipitate;
wherein step d) of aging is carried out at a temperature in the range from -25°C to 75°C, more preferably from 0°C to 60°C, most preferably from 5°C to 50°C, preferably in particular from 15°C to 30°C, more in particular from 20°C to 25°C.

2. The method according to claim 1, wherein the base is provided as an alkaline solution of a base selected from one or more of ammonia, KOH, NaOH, preferably ammonia.

3. The method according to any one of the previous claims, further comprising:
e) recovering the aged precipitate obtained in step d) thereby obtaining the Fe-LDH; and
f) preferably drying the aged precipitate recovered at step e).

4. The method according to any one of the previous claims, wherein the second cation is selected from one or more of Ca²⁺ and Mg²⁺, preferably Mg²⁺.

5. The method according to any one of the previous claims, wherein Fe³⁺ and the second cation are provided in a molar ratio of second cation to first cation from 1.1 to 6, preferably from 2 to 5, more preferably from 2.5 to 3.5.

6. The method according to any one of the previous claims, wherein step d) comprises aging the precipitate for at least 1 hour, preferably at least 4 hours; in particular between 1 hours and 15 days, more in particular from 4 hours to 10 days, preferably from 4 hours to 24 hours.

7. The method according to any one of the previous claims, wherein step c) further comprises maintaining the pH of the precipitation solution, at a pH higher than 8.5, preferably higher than 9.0, preferably higher than 9.5.

8. The method according to any one of the previous claims, wherein step d) comprises maintaining the pH of the precipitation solution at a pH higher than 8.5, preferably higher than 9.0, preferably higher than 9.5.

9. The method according to any one of the previous claims, wherein step c) comprises obtaining the precipitate at a temperature in a range from - 25°C to 95°C, preferably from - 10°C to 75°C, more preferably from 0°C to 60°C, most preferably from 5°C to 50°C, in particular from 15°C to 30°C, more in particular from 20°C to 25°C, even more particularly at room temperature.

10. A iron-based layered double hydroxide (Fe-LDH) obtainable according to a method according to any one of claims 1 to 9, having a specific surface area lower than 250 m²/g, preferably lower than 200 m²/g, more preferably lower than 150 m²/g, most preferably lower than 100 m²/g, in particular lower than 50 m²/g.

11. The iron-based layered double hydroxide (Fe-LDH) according to claim 10 having a crystal size of from 5 to 75 nm, more preferably from 5 to 50 nm, most preferably from 7.5 to 25 nm, in particular from 10 nm to 12 nm.

12. A method for producing an iron-based layered double oxide (Fe-LDO), said method comprising the steps:
a2) providing a Fe-LDH according to claims 10 to 11, or obtainable according to the method of any one of clams 1-9;
b2) calcining the Fe-LDH provided at step a2) at a temperature in the range from 280°C to 700°C, preferably from 300°C to 650°C, more preferably from 400 °C to 600 °C, most preferably from 500°C to 550°C, thereby obtaining said Fe-LDO.

13. Use of a Fe-LDH according to claim 10 to 11, or a Fe-LDO obtained according to the method of claim 12, as any one of a sorbent, a catalyst, a catalyst support, a chromatographic material, a filler or as a compound of a drug formulation

14. The use according to claim 13, of the Fe-LDH as a sorbent, a catalyst or a catalyst support, in an aqueous solution with a pH higher than 7, preferably higher than 10, more preferably higher preferably than 12.

15. The use according to any one of claims 13 to 14 for the selective sorption of ions selected from one or more of vanadium ions, chromium ions, antimony ions, refractory metal ions such as tungsten, tantalum, niobium ions, phosphates, arsenates, molybdates, fluorides.
